# EUROPÄISCHE PATENTSCHRIFT

(11) **EP 2 352 793 B1**
(45) Veröffentlichungstag und Bekanntmachung des Hinweises auf die Patenterteilung: **09.01.2013**
(21) Anmeldenummer: 09763910.8
(22) Anmeldetag: 20.11.2009
(51) Int. Cl.: C08L 63/00, C08G 77/42, C08L 101/00

(54) **SILOXAN-MISCHUNGEN ENTHALTENDE EPOXIDHARZE UND VERFAHREN ZU IHRER HERSTELLUNG UND DEREN VERWENDUNG**
SILOXANE MIXTURES CONTAINING EPOXIDE RESINS AND METHOD FOR THE PREPARATION THEREOF AND USE THEREOF
RÉSINES ÉPOXYDE RENFERMANT DES MÉLANGES DE SILOXANE, PROCÉDÉ POUR LEUR PRODUCTION ET LEUR UTILISATION

(30) Priorität: 28.11.2008 DE 102008044199
(43) Veröffentlichungstag der Anmeldung: 10.08.2011
(73) Patentinhaber: Wacker Chemie AG, 81737 München (DE)
(72) Erfinder: SCHÄFER, Oliver, 84489 Burghausen (DE); OSWALDBAUER, Helmut, 94166 Stubenberg (DE)
(74) Vertreter: Gössmann, Christoph Tassilo
(86) Internationale Anmeldenummer: PCT/EP2009/065515
(87) Internationale Veröffentlichungsnummer: WO 2010/060861

(56) Entgegenhaltungen:
- EP-A1- 0 676 448
- EP-A2- 0 230 619
- EP-A2- 0 266 513
- DE-A1- 3 938 157

## Beschreibung

Die Erfindung betrifft ein eine Siloxan-Mischung enthaltendes Epoxidharz und seiner Verwendung zur Herstellung duroplastischer Kunststoffe mit verbesserten mechanischen Eigenschaften wie Bruchzähigkeit und Schlagzähigkeit.

Durch die meist sehr hohe Vernetzungsdichte weisen vernetzte Epoxidharze einige wertvolle Eigenschaften auf, so dass sie neben den Thermoplasten zu den am meisten verwendeten Polymeren gehören. Zu diesen Eigenschaften zählen ihre Härte, Festigkeit, Chemikalienresistenz und Temperaturbeständigkeit. Dadurch qualifizieren sich diese Epoxidharze für Anwendungen auf den verschiedensten Gebieten, z.B. für die Herstellung von faserverstärkten Kunststoffen, für Isolierstoffe in der Elektrotechnik, zur Herstellung von Konstruktionsklebstoffen, Schichtpressstoffen, Einbrennlacken u.v.a.

Daneben weisen die Duroplaste einen gravierenden Nachteil auf, der in vielen Fällen einer Anwendung entgegensteht: Als Folge des hochvernetzten Zustandes besitzen sie eine sehr geringe Schlagzähigkeit. Dies trifft insbesondere auf den Bereich tiefer Temperaturen, d.h. auf Temperaturen unter 0 °C, zu, so dass man für Anwendungen, bei denen der Duroplast hohen mechanischen Belastungen, z.B. Schlagbeanspruchungen, bei niedrigen Temperaturen ausgesetzt werden könnte, normalerweise thermoplastischen Polymeren den Vorzug gibt, wobei damit verbundene Nachteile, wie geringere Wärmeformbeständigkeit und Chemikalienresistenz, in Kauf genommen werden müssen.

Zur Verbesserung dieses Verhaltens hat man mehrere Verfahren entwickelt, die Schlagzähigkeit oder Flexibilität von Duroplasten zu verbessern.

Die meisten dieser Verfahren zielen darauf ab, elastische Komponenten als Schlagzähmodifikatoren in die Reaktionsharze einzubringen.

Bekannt ist die Zugabe pulverförmiger, weicher Füllstoffe, wie Gummimehl oder weichelastische Kunststoffpulver, zu Reaktionsharzen. Die Teilchengröße derartiger pulverförmiger Zusätze liegt im Bereich von etwa 0,04 bis 1 mm, was offensichtlich nicht ausreicht, um solche Reaktionsharze in der gewünschten Weise zu verbessern, und was darüber hinaus mit Nachteilen für andere wichtige anwendungstechnische Eigenschaften derartig modifizierter Duroplaste verbunden ist.

Durch Zusatz von Weichmachern versucht man, die Schlagzähigkeit von vernetzten Epoxidharzen zu verbessern. Dadurch kann eine Verbesserung der Schlagzähigkeit erreicht werden, die aber leider eine Verschlechterung anderer wesentlicher Eigenschaften dieser Duroplaste bedingt. Darüber hinaus besteht bei der Verwendung von Weichmachern eine latente Gefahr des Ausblutens nach der Vernetzung des Reaktionsharzes mit den damit verbundenen negativen Folgen für die Oberflächeneigenschaften des Materials, wie der Haftung, Überstreichbarkeit oder Glanz.

Es ist auch bekannt, flüssige oder feste, jedoch unvernetzte Butadien-Acrylnitril-Kautschuke (Nitrilkautschuk, NBR) als zähigkeitsverbessernde Zusätze in Reaktionsharzen zu verwenden. Diese Elastomere enthalten funktionelle Gruppen, die mit dem Reaktionsharz beim Vernetzungsprozess oder auch in einer vorgelagerten Reaktion umgesetzt werden können. Durch Umsetzung der an der Oberfläche der Nitrilkautschukteilchen befindlichen funktionellen Gruppen mit dem Reaktionsharz entsteht eine feste Verbindung der Kautschukphase mit der Duroplastmatrix.

Leider weisen aber auch derartige mit Nitrilkautschuk modifizierte Duroplaste wesentliche Mängel auf. So wird z.B. die thermische Beständigkeit von mit Nitrilkautschuk modifizierten Duroplasten verschlechtert und damit deren Verwendbarkeit bei hohen Temperaturen infrage gestellt. Das gleiche gilt für viele elektrische Eigenschaften, wie z.B. die Durchschlagfestigkeit. Aufgrund der relativ guten Verträglichkeit des Nitrilkautschuks mit den meisten Epoxidharzen nimmt ein gewisser Anteil des Kautschuks an der Phasentrennung beim Vernetzen nicht teil und wird in die Harzmatrix eingebaut, was das Eigenschaftsbild des fertigen Duroplasten verschlechtert. Ein weiterer Nachteil ist die sehr hohe Viskosität der Nitrilkautschuk-Modifikatoren, die zu Verarbeitungsproblemen führt und die Fliesseigenschaften des modifizierten Reaktionsharzes beeinträchtigt. Aus der US 5284938 ist bekannt, auch Siloxan-Polyester Copolymere als Schlagzähmodifikator in Epoxid-Harzen zu verwenden. Diese haben leider den Nachteil die Steifigkeit des Epoxid-Harzen stark herabzusetzen, was nicht immer erwünscht ist.

EP 0266513 B1 beschreibt modifizierte Reaktionsharze, Verfahren zu deren Herstellung und deren Verwendung. Hierbei werden funktionalisierte vernetzte Organopolysiloxan-Kautschuke in situ im zu verwendenden Harz hergestellt. Es beschränkt sich auf Zusammensetzungen, die neben einem Reaktionsharz max. 2-50 Gew.% dreidimensional vernetzte Polyorganosiloxankautschuke enthalten, die Partikelgrößen von 0,01 bis 50 Mikrometer in Mengen von 2-50 Gew.% aufweisen, wobei die Eigenschaften der dort beschriebenen Zusammensetzung in Bezug auf Schlagfestigkeit und Schlagzähigkeit ungenügend sind. Nachteilig ist auch hier, dass die Fließeigenschaften des so modofizierten Epoxid-Harzes negativ beeinflusst werden.

Die W02006037559 beschreibt modifizierte Reaktionsharze sowie Verfahren zu deren Herstellung. Hierbei werden Lösungen von vorgeformten Partikeln in organischen Lösungen mit Reaktionsharzen gemischt und durch anschließendes Entfernen des Lösungsmittels können die erfindungsgemäßen Reaktionsharze gewonnen werden. Nachteilig an diesem Verfahren sind die zum Teil großen Mengen an Lösungsmittel, die nur sehr aufwändig wieder entfernt werden können und bei nicht vollständiger Entfernung beim Aushärten der Reaktionsharze zu Fehlstellen im Material führen können.

DE 39 38 157 beschreibt modifizierte Reaktionsharzzusammensetzungen, die Epoxidharze, Polyorganosiloxane und Polyether/Polysiloxan Pfropfcopolymer als Dispersionsmittel enthalten. Die auf diese Weise modifizierte Reaktionsharze weisen eine verbesserte Schlagfestigkeit auf.

EP 0 230 619 beschreibt modifizierte Reaktionsharzzusammensetzungen, die Epoxidharze, reaktive Endgruppen enthaltende Polyorganosiloxane und Polyether/polysiloxan Pfropfcopolymer als Dispersionsmittel. Die hergestellte Reaktionsharzprodukte weisen eine höhere Schlagfestigkeit auf.

Aufgabe der Erfindung ist es, den Stand der Technik zu verbessern und ein homogenes Reaktionsharz herzustellen, welches nach Aushärtung und Formgebung verbesserte Eigenschaften hinsichtlich Schlagfestigkeit und Schlagzähigkeit aufweist, sowie gegebenenfalls nur geringe Leitfähigkeitswerte zeigt.

Gegenstand der Erfindung ist eine Zusammensetzung enthaltend (A) 50 - 99,5 Gew.-% bezogen auf das Gesamtgewicht von A, B und C eines zu Duroplasten verarbeitbaren, bei Temperaturen im Bereich von 15 bis 100 °C flüssigen Reaktionsharzes oder Reaktionsharzgemisches mit einem mittleren Molekulargewicht von 200 bis 500.000 und mit einer für den Härtungsprozess ausreichenden Zahl geeigneter reaktiver Gruppen und (B) 0,5 - 50 Gew.-% bezogen auf das Gesamtgewicht von A, B und C eines oder mehrerer dispergierter Polyorganosiloxane, die vorzugsweise eine Viskosität von 0,65 bis 2000000, bevorzugt 10 bis 100000, besonders bevorzugt 100 bis 10000 mPa·s besitzen und die in dem Reaktionsharz oder Reaktionsharzgemisch homogen in feinverteilter Form als Polyorganosiloxan-Tropfen mit einem Durchmesser von vorzugsweise 0,001 bis 4 µm, bevorzugt 0,01 bis 0,8 µm, ganz besonders bevorzugt 0,02 bis 0,4 µm enthalten sind, wobei das Organopolysiloxanteilchen ein Polymer der allgemeinen Formel (R₃SiO_{1/2})_{w}(R₂SiO_{2/2})ₓ.(RSiO_{3/2})_{y}.(SiO_{4/2})₂ mit w = 0 bis 20 Mol %, x = 80 bis 99,59 Mol%, y = 0,5 bis 10 Mol%, z = 0 bis 10 Mol% ist (C) 0,1 - 50 Gew.-% bezogen auf das Gesamtgewicht von A, B und C eines oder mehrerer Siliconorganocopolymere als Dispergiermittel, die in dem Reaktionsharz oder Reaktionsharzgemisch homogen löslich sind oder homogen emulgiert werden können.

Vorzugsweise sind die Reste R Wasserstoff oder Alkylreste, wie der Methyl-, Ethyl-, n-Propyl-, Isopropyl-, n-Butyl-, sec.-Butyl-, Amyl-, Hexylrest; Alkoxyreste wie der Methoxy oder Ethoxyrest; Alkenylreste, wie der Vinyl- und Allylrest und Butenylrest; Arylreste, wie der Phenylrest; oder substituierte Kohlenwasserstoffreste. Beispiele hierfür sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Mercaptoalkylreste, wie der 2-Mercaptoethyl- und 3-Mercaptopropylrest; Cyanoalkylreste, wie der 2- Cyanoethyl- und 3-Cyanopropylrest; Aminoalkylreste, wie der 3-Aminopropylrest; Acyloxyalkylreste, wie der 3-Acryloxypropyl- und 3-Methacryloxypropylrest; Hydroxyalkylreste, wie der Hydroxypropylrest; oder Epoxidreste wie der Glycidyloxypropylrest

Besonders bevorzugt sind die Reste Methyl, Ethyl, Propyl, Phenyl, Vinyl, 3-Methacryloxypropyl, 1-Methacryloxymethyl, 1-Acryloxymethyl und 3-Mercaptopropyl, wobei weniger als 30 Mol% der Reste im Siloxanpolymerisat Vinyl-, 3-Methacryloxypropyl oder 3-Mercaptopropylgruppen sind.

Die feinteiligen Siloxantröpfchen haben vorzugsweise eine mittlere Teilchengröße (Durchmesser) von 1 bis 4000 nm, bevorzugt von 10 bis 800 nm, besonders bevorzugt 20 - 400 nm, gemessen mit dem Transmissions-Elektronen-Mikroskop.

Dabei können die Polyorganosiloxan-Tropfen reaktive Gruppen aufweisen, die vor oder bei der weiteren Verarbeitung des modifizierten Reaktionsharzes (A) mit dem Reaktionsharz chemisch reagieren, gegebenenfalls zusammen mit geringen Mengen an Hilfsstoffen, insbesondere an Vernetzungsmitteln, Katalysatoren und/oder Härtungsmitteln.

Das modifizierte Reaktionsharz A ist bevorzugt weiterhin dadurch gekennzeichnet, dass der Gehalt an Natrium, Magnesium oder Calzium -Ionen unter 50 ppm liegt sowie der Gehalt an Chlorid, Sulfat-Ionen ebenfalls unter 50 ppm liegt.

Der Gehalt an Rest-Lösungsmittel beträgt bevorzugt weniger als 0,3 Gew.%, ganz besonders bevorzugt weniger als 0,1 Gew.%.

Besonders bevorzugt sind Dispergiermittel/Emulgatoren C aus siloxanhaltigen-Blockcopolymeren oder siloxanhaltigen Graftpolymeren, wobei ein Teil des Copolymeren ein Siloxanteil sein muss. Bevorzugt sind siloxanhaltige Blockcopolymere enthaltend Siloxaneinheiten mit einem Molekulargewicht von vorzugsweise 1000 - 10000 g/mol. Der organische Teil des Siloxanorganocopolymeren ist bevorzugt aus (Co)polymeren des Methylmethacrylates oder aliphatischer Polyester aufgebaut.

Ganz besonders bevorzugt handelt es sich bei dem Dispergiermittel C um ein Polysiloxan-Polycaprolacton Blockcopolymer enthaltend eine Siloxaneinheit mit einem Molekulargewicht von 1500 - 4000 g/mol, bevorzugt 2000 bis 3000.

Bevorzugt besitzt das Dispergiermittel C eine Viskosität von unter 20 Pa*s im Temperaturbereich von 20 bis 100 °C.

Vorzugsweise enthält das erfindungsgemäß modifizierte Reaktionsharz A 0,5 bis 50 Gew.%, bevorzugt 1. bis 15 Gew.-%, besonders bevorzugt 2 bis 10 Gew.% eines oder mehrerer dispergierter Oiganopolysiloxane (B) bezogen auf die Summe aus A+B+C.

Als Reaktionsharze A sind erfindungsgemäß alle polymeren oder oligomeren organischen Verbindungen geeignet, die mit einer für eine Härtungsreaktion ausreichenden Zahl geeigneter reaktiver Gruppen versehen sind. Als Ausgangsprodukte für die Herstellung der erfindungsgemäß modifizierten Reaktionshurze sind allgemein alle Reaktionsharze geeignet, die sich zu Duroplasten verarbeiten lassen, unabhängig vom jeweiligen Vernetzungsmechanismus, der bei der Härtung des jeweiligen Reaktionsharzes abläuft.

Grundsätzlich lassen sich die als Ausgangsprodukte verwendbaren Reaktionsharze entsprechend der Art der Vernetzung durch Addition, Kondensation oder Polymerisation in drei Gruppen einteilen.

Aus der ersten Gruppe der durch Polyaddition vernetzten Reaktionsharze werden bevorzugt ein oder mehrere Epoxidharze, Urethanharze und/oder lufttrocknende Alkydharze als Ausgangsmaterial ausgewählt. Epoxid-und Urethanharze werden in der Regel durch Zusatz stöchiometrisoher Mengen eines Hydroxyl-, Amino-, Carboxyl- oder Carbonsäureanhydridgruppen enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autoxidation mit Luftsauerstoff. Auch additionshärtende Siliconharze sind bekannt, vorzugsweise solche mit der Maßgabe, dass keine weiteren freien Silane enthalten sind.

Beispiele für die zweite Gruppe der durch Polykondensation vernetzten Reaktionsharze sind vorzugsweise Kondensationsprodukte von Aldehyden, z.B. Formaldehyd, mit amingruppenhaltigen aliphatischen oder aromatischen Verbindungen, z.B. Harnstoff oder Melamin, oder mit aromatischen Verbindungen wie Phenol, Resorcin, Kresol usw., ferner Furanharze, gesättigte Polyesterharze und kondensationshärtende Silikonharze. Die Härtung erfolgt hierbei meist durch Temperaturerhöhung unter Abspaltung von Wasser, niedermolekularen Alkoholen oder anderen niedermolekularen Verbindungen. Bevorzugt werden als Ausgangsmaterial für die erfindungsgemäß modifizierten Reaktionsharze ein oder mehrere Phenol-Harze, Resorcin-Harze und/oder Kresol-Harze, und zwar sowohl Resole als auch Novolake, ferner Harnstoff, Formaldehyd und Melamin- Formaldehyd-Vorkondensate, Furanharze sowie gesättigte Polyesterharze und/oder Silikonharze ausgewählt.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z.B. Peroxide, Peroxoverbindungen oder Azogruppen enthaltende Verbindungen. Auch eine Initiierung der Vernetzungsreaktion durch energiereiche Strahlung, wie UV oder Elektronenstrahlung, ist möglich.

Nicht nur die vorstehend genannten Reaktionsharzes, sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im wesentlichen unbeeinflusst erhalten bleiben. Hierbei spielt es keine Rolle, ob die Reaktionsharze bei Raumtemperatur fest oder flüssig sind. Auch das Molekulargewicht der Reaktionsharze ist praktisch ohne Belang. Verbindungen, die oft als Härterkomponenten für Reaktivharze eingesetzt werden, wie z.B. Phenolharze oder Anhydridhärter können auch als Reaktivharze aufgefasst werden.

Bevorzugt können als Reaktivharze in der erfindungsgemäßen Zusammensetzung enthalten sein: Epoxidharze, wie der Bisphenol-A-diglycidylether, Bisphenol-F-diglycidylether, Novolak-Epoxidharze, Biphenyl-Einheiten enthaltende Epoxidharze, aliphatische oder cycloaliphatische Epoxidharze, wie 3,4-Epoxycyclohexylmethyl-3, 4-epoxycyclohexancarboxylat. Alle Epoxidharze können mehr oder weniger stark von der monomeren Struktur abweichen, je nach dem Grad der Kondensation bei der Herstellung. Weiterhin können Acrylatharze für die erfindungsgemäßen Zusammensetzungen eingesetzt werden.

Beispiele für bevorzugte Acrylatharze sind Triethylenglykoldimethacrylat, Urethandimethacrylat, Glycidylmethacrylat. Auch Phenolharze, Urethanharze, Siliconharze letztere vorzugsweise solche mit der Maßgabe, dass keine weiteren freien Silane enthalten sind.

Verfahren zur Herstellung von Siloxan-Mischung enthaltenden Epoxidharzen, dadurch gekennzeichnet, dass
(A) 50 - 99,5 Gew.-% bezogen auf das Gesamtgewicht von A, B und C eines zu Duroplasten verarbeitbaren, bei Temperaturen im Bereich von 15 bis 100 °C flüssigen Reaktionsharzes oder Reaktionsharzgemisches mit einem mittleren Molekulargewicht von 100 bis 500.000 und mit einer für den Härtungsprozess ausreichenden Zahl geeigneter reaktiver Gruppen und
(B) 0,5-50 Gew.-% bezogen auf das Gesamtgewicht von A, B und C eines oder mehrerer Polyorganosiloxane der allgemeinen Formel (R₃SiO_{1/2})_{w}(R₂SiO_{2/2})ₓ.(RSiO_{3/2})_{y}.(SiO_{4/2})_{z} mit w = 0 bis 20 Mol %, x = 80 bis 99,9 Mol%, y = 0,5 bis 10 Mol%, z = 0 bis 10 Mol% ist und das Dispergiermittel
(C) 0,1 - 50 Gew.-% bezogen auf das Gesamtgewicht von A, B und C eines oder mehrerer Siliconorganocopolymere (bezogen auf die Summe aus A+B+C)
zusammen bei Temperaturen von 0 °C bis 180 °C vermischt werden, wobei die (B) Polyorganosiloxantröpfchen im Reaktionsharz homogen in feinverteilter Form als Polyorganosiloxan-Tropfen mit einem Durchmesser von vorzugsweise 0,001 bis 4 µm, bevorzugt 0,01 bis 0,8 µm, ganz besonders bevorzugt 0,02 bis 0,4 µm verteilt werden.

Dabei liegt das Siloxan B bezogen auf die Menge des Dispergiermittels C in Mengen von 50 % bis 1000 Gew. %, bevorzugt in Mengen von 100 % bis 700 Gew. % und ganz besonders bevorzugt in Mengen von 200 % bis 500 Gew.% vor.

Bei Temperaturen von 0 °C bis 180 °C, bevorzugt bei Temperaturen von 10 °C bis 100 °C, werden die Komponenten vermischt, wobei die Polyorganosiloxan-Tröpfchen im Reaktionsharz homogen verteilt werden. Hierfür können u.a. Rührer, Dissolver, Kneter, Walzenstühle, Hochdruckhomogenisatoren, Ultraschallhomogenisatoren u. Dispergiergeräte vom Typ "Ultra-Turrax" verwendet werden. Die angewandten Temperaturen dürfen nicht dazu führen, dass eine merkliche Vernetzung der Reaktionsharze während der Dispergierphase auftritt.

Hierbei können gegebenenfalls weitere Lösungsmittel zugegeben werden, bevorzugt wird dabei auf die Verwendung von Lösungsmitteln verzichtet.

Hierbei können gegebenenfalls weitere Füllstoffe zugegeben werden.

Diese erfindungsgemäße Mischung aus Reaktionsharz und Polyorganosiloxanen kann gegebenenfalls noch weitere Siloxanteilchen enthalten wie z.B. in EP 744 432 A oder EP 0 266 513 B1 beschrieben sind.

Die modifizierten Reaktionsharze gemäß vorliegender Erfindung weisen eine Reihe von Vorteilen gegenüber vergleichbaren bekannten Produkten auf und können daher auf zahlreichen Gebieten vorteilhaft eingesetzt werden. Zu diesen Vorteilen gehören in erster Linie die Verbesserung der Bruch- und Schlagzähigkeit von duroplastischen Kunststoffen, und zwar sowohl bei sehr tiefen Temperaturen je nach verwendetem Polyorganosiloxan bis zu -50 °C als auch bei sehr hohen Temperaturen, d.h. bis zur Erweichungstemperatur des jeweiligen Duroplasten. Wichtig ist ferner, dass durch die Modifizierung kein negativer Einfluss auf Härte, Festigkeit und Erweichungstemperatur des vernetzten Reaktionsharzes ausgeübt wird. Durch die Elastomerkomponente besitzt das erfindungsgemäß ausgehärtete Reaktionsharz eine hohe Alterungs-, Witterungs-, Licht- und Temperaturbeständigkeit, ohne dass dadurch die charakteristischen Eigenschaften des Duroplasten selbst beeinträchtigt werden. Auch die elektrischen Eigenschaften, insbesondere die Isolatoreigenschaften des Reaktionsharzes, werden vor allem bei höheren Temperaturen nicht beeinträchtigt. Die Verarbeitung der erfindungsgemäßen schlagzäh modifizierten Reaktionsharze kann in herkömmlicher Art und Weise erfolgen. Die erfindungsgemäß modifizierten Reaktionsharze sind für alle Einsatzgebiete geeignet, in denen Duroplaste üblicherweise verwendet werden. Zusätzlich sind sie insbesondere für solche Anwendungen geeignet, bei denen reine Duroplaste wegen ihrer unbefriedigenden Bruch- und Schlagzähigkeit bisher nicht eingesetzt werden konnten. Geeignete Verwendungen der erfindungsgemäß modifizierten Reaktionsharze sind insbesondere solche zur Herstellung von bruch- und schlagzähen, gegebenenfalls ausgeformten duroplastischen Kunststoffen, faserverstärkten Kunststoffen, Isolierstoffen in der Elektrotechnik und Schichtpressstoffen. Aufgrund ihres geringen Beitrages zur Viskosität des Epoxid-Harzen eignen sich die erfindungsgemäßen Produkte auch für sogenannte RIM Techniken.

Es wurde gefunden, dass durch die erfindungsgemäß vorgeschlagene Zusammensetzung ein modifiziertes Reaktionsharz erhalten wird, das bei der anschließenden, an sich bekannten formgebenden Verarbeitung und Aushärtung einen duroplastischen Kunststoff ergibt, der gegenüber nicht oder nicht in der gleichen Weise modifizierten Duroplasten eine erheblich verbesserte Materialzähigkeit oder Bruchzähigkeit, insbesondere Schlagzähigkeit, aufweist, während die übrigen, für Duroplaste vorteilhaften Eigenschaften, wie Temperaturbeständigkeit, Festigkeit und Chemikalienresistenz, nicht oder nur unwesentlich beeinträchtigt werden.

### Substanzen:

RIM 135: Mischung eines Bisphenol-A-bisglycidylethers und Hexandiolbisglycidylether mit einer Viskosität von 800 mPas der Fa. Hexion
RIM 137: Aminhärter der Fa. Hexion enthaltend Isophorondiamin mit einer Viskosität von 20 mPas
AK 1000: trimethylsilyl-terminiertes Polydimethylsiloxan mit einer Viskosität von 1000 mPas (Wacker Chemie AG)
AK100: trimethylsilyl-terminiertes Polydimethylsiloxan mit einer Viskosität von 100 mPas (Wacker Chemie AG)
CT601: OH-terminiertes Polydimethylsiloxan mit einer Viskosität von 300 mPas (Wacker Chemie AG)
FLUID NH 130 D: Bisaminopropyl-terminiertes Polydimethylsiloxan mit einer Viskosität von 290 mPas (Wacker Chemie AG)

### Beispiel 1 (nicht erfindungsgemäß):

### Herstellung des Polysiloxan-Polycaprolacton-Blockcopolymers:

800 g eines Bishydroxypropyl-terminierteri Polydimethylsiloxans mit einem Molekulargewicht von 2750 g/mol wurde mit 800 g ε-Caprolacton (Fa. Solvay Caprolactones) vermischt. Anschließend wurden 500 ppm Dibutylzinnlilaurat hinzu gegeben und die Reaktionsmischung auf 70°C unter Rühren erwärmt und 1 Stunde bei dieser Temperatur gehalten. Daraufhin wurde auf 140°C erwärmt und 6 Stunden bei dieser Temperatur unter Rühren gehalten. Abschließend wurde im Hochvakuum (< 10 mbar) ca. 1 bis 2% der Reaktionsmischung entfernt (Siloxan-Cyclen sowie ε-Caprolacton). Das entsprechend erhaltene Copolymer wurde abschließend abgekühlt und granuliert.

Man erhlelt eine Polyorganosiloxan-Polycaprolacton-Blockcopolymer mit einem Siloxangehalt von 50 Gew.% und einem mittleren Molekulargewicht von 5180 g/mol.

### Beispiel 2-7 (erfindungsgemäß):

Das in Beispiel 1 erhaltene Copolymer wurde mit verschiedenen Polyorganosiloxanen bei ca. 60 °C homogen vermischt.

| | **Beispiel 2*** | **Beispiel 3** | **Beispiel 4** | **Beispiel 5** | **Beispiel 6** | **Beispiel 7** |
|---|---|---|---|---|---|---|
| Polysiloxan | - | AK 100 | AK 1000 | CT 601 | FLUID NH 130 D | AK 100 |
| Viskositat Polysilozan | - | 100 mPas | 1000 mPas | 290 mPas | 410 mPas | 100 mPas |
| Polysiloxan-Organocopolymer (C) | Beispiel 1 | Beispiel 1 | Beispiel 1 | Beispiel 1 | Beispiel 1 | - |
| Menge Polysiloxan | 0 g | 300 g | 300 g | 300 g | 3009 g | 400 q |
| Menge Polysiloxanorganocopolymer | 400 g | 100 g | 100 g | 100 g | 100 g | 0 g |
| Menge Mischung | 400 g | 400 g | 400 g | 400 g | 400 g | 400 g |
| Theoretischer Modifiergehalt | 100 % | 100 % | 100 % | 100 % | 100 % | 100 % |
| Aussehen der Mischung | klar | transluzent, kein sediment | transluzent, kein sediment | transluzent, kein Sediment | transluzent, kein sediment | klar |

| | | | | | | |
|---|---|---|---|---|---|---|
| * nicht erfindungsgemaß | | | | | | |

Anwendungstechnische Prufung:

### Beispiele 8-14 (Herstellung modifizierter Epoxid - Harze)

Die in den Beispielen 2-5 gewonnenen Mischungen wurden bei 60 °C mit einem Rotor-Stator Mischer (Ultra-Turrax) in variierenden Gewichtsverhaltnissen in verschiedene Reaktionsharze ca. 5 Minuten eingemischt, wobei die Temperatur auf ca. 70 °C anstieg. Nach Zugabe des Harters und eines Beschleunigers wurde nochmals homogenisiert, entgast und in Aluminiumformen bei erhohten Temperaturen (15 h Raumtemperatur und 15 h 80 °C) ausgehartet.

| | **Beispiel B*** | **Beispiel 9*** | **Beispiel 10** | **Beispiel 11** | **Beispiel 12** | **Beispiel 13** | **Beispiel 14** |
|---|---|---|---|---|---|---|---|
| verwendete Mischung | - | Beispiel 2 | Beispiel 3 | Beispiel 4 | Beispiel 5 | Beispiel 6 | Beispiel 7 |
| Menge Mischung | | 43 g | 43 g | 43 g | 43 g | 43 g | 43 g |
| Reaktionsharz | RIM 135 (Hexion) | RIM 135 (Hexion) | RIM 135 (Hexion) | RIM 135 (Hexion) | RIM 135 (Hexion) | RIM 135 (Hexion) | RIM 135 (Hexion) |
| Reaktionsharz-Typ | Epoxid | Epoxid | Epoxid | Epoxid | Epoxid | Epoxid | Epoxid |
| Menge Raktionsharz A (Epoxid) | 300 g | 300 g | 300 g | 300 g | 300 g | 300 g | 300 g |
| Menge Raktionsharz B (Anhydrid) | RIM 137 (Hexion) 90 g | RIM 137 (Hexion) 90 g | RIM 137 (Hexion) 90 g | RIM 137 (Hexion) 90 g | RIM 137 (Hexion) 90 g | RIM 137 (Hexion) 90 g | RIM 137 (Hexion) 90 g |
| theoretischer Modifiergehalt | 0 % | 10 % | 10 % | 10 % | 10 % | 10 % | 10 % |
| Aussehen Duroplast | transpar ent | weiß | weiß | weiß | weiß | weiß | weiß, heterogen |
| Schlagzähigk eit, 23 °C, (kJ/M2) 8 mm Platte | 9,58 | 13,84 | 13,74 | 13,67 | 13,58 | 13,68 | 6,54 |
| Modul, 4 mm Platte, Biegeversuch | 3431 MPa | 2523 | 3039 | 3025 | 2953 | 2889 | nicht messbar |
| Teilchengröße | 100-200nm | ca 200nm | ca.200nm | ca 200nm | ca 1 00nm | ca. 150 nm | > 1000 nm |

| | | | | | | | |
|---|---|---|---|---|---|---|---|
| *nicht erfindungsgemaß | | | | | | | |

Die Beispiele zeigen, dass mit den dispergierbaren Siloxanen auf einfachem Wege hartbare Mischungen verschiedenster Epoxidharze in verschiedensten Konzentrationen hergestellt werden konnen, um damit die Schlagzahigkeit der so ausgerusteten Epoxidharze zu verbessern. Diese zeichnen sich weiterhin durch hohe Moduli im Vergleich zu anderen verwendeten Modifiern aus. Dabei wird die Emulgatorkomponente dringend benotigt, um das Siloxan homogen im Reaktionsharz zu dispergieren.

## Patentansprüche

1. Zusammensetzung enthaltend
(A) 50 - 99,5 Gew.-% bezogen auf das Gesamtgewicht von A, B und C eines zu Duroplasten verarbeitbaren, bei Temperaturen im Bereich von 15 bis 100 °C flüssigen Reaktionsharzes oder Reaktionsharzgemisches mit einem mittleren Molekulargewicht von 200 bis 500.000 und mit einer für den Härtungsprozess ausreichenden Zahl geeigneter reaktiver Gruppen und
(B) 0,5 - 50 Gew.-% bezogen auf das Gesamtgewicht von A, B und C eines oder mehrerer dispergierter Polyorganosiloxane, die in dem Reaktionsharz oder Reaktionsharzgemisch homogen in feinverteilter Form als Polyorganosiloxan-Tropfen mit einem Durchmesser von 0,001 bis 4 µm enthalten sind, wobei das organopolysiloxanteilchen ein Polymer der allgemeinen Formel (R₃SiO_{1/2})_{w}(R₂SiO_{2/2})ₓ.(RSiO_{3/2})_{y}.(SiO_{4/2})_{z} mit w = 0 bis 20 Mol %, x = 80 bis 99,9 Mol%, y = 0,5 bis 10 Mol%, z = 0 bis 10 Mol% ist,
(C) 0,1 - 50 Gew.-% bezogen auf das Gesamtgewicht von A, B und C eines oder mehrerer siloxanhaltige Blockcopolymere als Dispergiermittel, die in dem Reaktionsharz oder Reaktionsharzgemisch homogen löslich sind oder homogen emulgiert werden können.

2. Zusammensetzung nach Anspruch 1, **dadurch gekennzeichnet, dass** A ein Epoxidharz, Vinylesterharz oder ein ungesättigtes Polyesterharz ist.

3. Zusammensetzung nach Anspruch 1 **dadurch gekennzeichnet, dass** B ein Organopolysiloxanteilchen aus ein em Polymer der allgemeinen Formel (R₃SiO_{1/2})_{w}(R₂SiO_{2/2})ₓ mit w = 0 bis 20 Mol %, x = 80 bis 99,9 Mol%, ist.

4. Zusammensetzung nach Anspruch 1, **dadurch gekennzeichnet, dass** es sich beim Dispergiermittel C um ein Polysiloxan-Polycaprolacton Blockcopolymer, enthaltend eine Siloxaneinheit mit einem Molekulargewicht von 1500 - 4000 g/mol, handelt.

5. Bruch- und schlagzähe, duroplastische Kunststofffestkörper, **dadurch gekennzeichnet, dass** sie eine Zusammensetzung nach Anspruch 1 bis 4 enthalten.

6. Isolierstoffe **dadurch gekennzeichnet, dass** sie eine Zusammensetzung nach Anspruch 1 bis 4 enthalten.

7. Faserverbundwerkstoffe **dadurch gekennzeichnet, dass** sie eine Zusammensetzung nach Anspruch 1 bis 4 enthalten.

## Claims

1. Composition comprising
(A) 50 - 99.5% by weight based on the total weight of A, B and C of a reactive resin or reactive resin mixture which can be processed to give thermosets, and which is liquid at temperatures in the range from 15 to 100°C and has an average molecular weight of from 200 to 500 000, and has a sufficient number of suitable reactive groups for the curing process, and
(B) 0.5 - 50% by weight based on the total weight of A, B and C of one or more dispersed polyorganosiloxanes, which are present homogeneously in finely dispersed form as polyorganosiloxane droplets having a diameter of from 0.001 to 4 µm in the reactive resin or reactive resin mixture, wherein the organopolysiloxane particle is a polymer of the general formula (R₃SiO_{1/2})_{w}(R₂SiO_{2/2})ₓ.(RSiO_{3/2})_{y}.(SiO_{4/2})_{z} where w = 0 to 20 mol%, x = 80 to 99.9 mol%, y = 0.5 to 10 mol%, z = 0 to 10 mol%,
(C) 0.1 - 50% by weight based on the total weight of A, B and C of one or more siloxane-containing block copolymers as dispersants, which form a homogeneous solution or emulsion in the reactive resin or reactive resin mixture.

2. Composition according to Claim 1, **characterized in that** A is an epoxy resin, a vinyl ester resin or an unsaturated polyester resin.

3. Composition according to Claim 1, **characterized in that** B is an organopolysiloxane particle from a polymer of the general formula (R₃SiO_{1/2})_{w}(R₂SiO_{2/2})ₓ where w = 0 to 20 mol%, x = 80 to 99.9 mol%.

4. Composition according to Claim 1, **characterized in that** said dispersant C is a polysiloxane-polycaprolactone block copolymer comprising a siloxane unit having a molecular weight of 1500 - 4000 g/mol.

5. Fracture- and impact-tough solid thermoset plastics article, **characterized in that** it comprises a composition according to Claim 1 or 2 or 3 or 4.

6. Insulation material, **characterized in that** it comprises a composition according to Claim 1 or 2 or 3 or 4.

7. Fiber composite material, **characterized in that** it comprises a composition according to Claim 1 or 2 or 3 or 4.

## Revendications

1. Composition contenant
(A) 50 à 99,5 % en poids, par rapport au poids total de A, B et C, d'une résine réactive ou d'un mélange de résines réactives transformable en duroplastes, liquide à des températures dans la plage allant de 15 à 100 °C, d'un poids moléculaire moyen de 200 à 500 000 et contenant un nombre de groupes réactifs appropriés suffisant pour le procédé de durcissement, et
(B) 0,5 à 50 % en poids, par rapport au poids total de A, B et C, d'un ou de plusieurs polyorganosiloxanes dispersés, qui sont contenus de manière homogène dans la résine réactive ou le mélange de résines réactives sous forme finement divisée en tant que gouttes de polyorganosiloxane d'un diamètre de 0,001 à 4 µm, la particule d'organopolysiloxane étant un polymère de formule générale (R₃SiO_{1/2})_{w}(R₂SiO_{2/2})ₓ. (RSiO_{3/2})_{y}. (SiO_{4/2})_{z} avec w = 0 à 20 % en moles, x = 80 à 99,9 % en moles, y = 0,5 à 10 % en moles, z = 0 à 10 % en moles,
(C) 0,1 à 50 % en poids, par rapport au poids total de A, B et C, d'un ou de plusieurs copolymères séquencés contenant du siloxane en tant qu'agent de dispersion, qui sont solubles de manière homogène ou peuvent être émulsifiés de manière homogène dans la résine réactive ou le mélange de résines réactives.

2. Composition selon la revendication 1, **caractérisée en ce que** A est une résine époxyde, une résine d'ester de vinyle ou une résine de polyester insaturée.

3. Composition selon la revendication 1, **caractérisée en ce que** B est une particule d'organopolysiloxane en un polymère de formule générale (R₃SiO_{1/2})_{w}(R₂SiO_{2/2})ₓ avec w = 0 à 20 % en moles, x = 80 à 99,9 % en moles.

4. Composition selon la revendication 1, **caractérisée en ce que** l'agent de dispersion C est un copolymère séquencé polysiloxane-polycaprolactone, contenant une unité siloxane d'un poids moléculaire de 1 500 à 4 000 g/mol.

5. Corps solides plastiques duroplastiques résistants aux fractures et aux impacts, **caractérisés en ce qu'**ils contiennent une composition selon les revendications 1 à 4.

6. Matériaux isolants, **caractérisés en ce qu'**ils contiennent une composition selon les revendications 1 à 4.

7. Matériaux composites fibreux, **caractérisés en ce qu'**ils contiennent une composition selon les revendications 1 à 4.
